# EUROPEAN PATENT SPECIFICATION

(11) **EP 3 267 545 B1**
(45) Date of publication and mention of the grant of the patent: **26.06.2019**
(21) Application number: 16382316.4
(22) Date of filing: 04.07.2016
(51) Int. Cl.: H02J 3/12

(54) **ALTERNATE CURRENT (AC) VOLTAGE STABILIZER**
WECHSELSTROMSPANNUNGSSTABILISATOR
STABILISATEUR DE TENSION EN COURANT ALTERNATIF (CA)

(43) Date of publication of application: 10.01.2018
(73) Proprietor: eQnizer AG, 6340 Baar (CH)
(72) Inventor: BARBA URRACO, Rafael, 28820 Coslada (Madrid) (ES); GARCÍA JERÉZ, José, 28830 San Fernando de Henares (Madrid) (ES)
(74) Representative: Lahidalga de Careaga, Jose Luis

(56) References cited:
- EP-A2- 1 303 031
- WO-A1-91/17492
- WO-A2-99/28931

## Description

### Object of the invention

The Alternate Current (AC) Voltage Stabilizer which the invention proposes bases its functionality in controlling, as best as possible, excess voltage from the mains electricity grid. The European Union regulations states that the voltage which reaches the consumers should be 230-240 volts in mono-phase systems and 400-420 volts in three-phase systems.

The mission of the AC Voltage Stabilizer which the invention proposes is to set the voltage at 222 volts for mono-phase systems and at 385 volts for three-phase systems, which, although seem small and assumable variations for electrical appliances, by setting the voltage we are able to achieve remarkable effects in the performance of the appliances, such as the durability of the receptors, due to the fact that in many cases the present design of electrical components conforms to the parameters of 220 volts for mono-phase-systems and 380 volts for three-phase systems.

### Background of the invention

The applicant is aware of the existence of various patents which bear reference to voltage stabilizing devices, i.e., surge protectors. In this respect, considering that one of the peculiarities of the system here presented is the reduction in electric consumption, nowadays it is possible to find products of this type, but they do not have the same capabilities or at any rate only partially covers the substance of the patent herein described and which we will describe in detail later on.

Regarding voltage stabilizers in particular, we can go back to registrations from 1948 by MARCONI'S WIRELESS TELEGRAPH COMPANY LIMITED, Registration No. 185771 on an IMPROVEMENT OF THE DISPOSITION OF SURGE PROTECTORS", the description of which makes reference to a small electric electronic circuit being noted for low voltages due to their work with voltage and resistance, an issue that is not suitable for work in industry.

In a similar manner, other systems, such as that presented by Mr. LUIS BUSH ONSARI in 1951 registration no. 197047 on a 'REGULATING AND STABILIZER SYSTEM FOR ALTERNATING CURRENT' which makes reference to a system of voltage reducing transformers, compensated by continuous flow (DC) coils which influence the secondary circuit, signifying that the said coils need to be activated when the alternate current (AC) waveform reaches its maximum circuit working cycle. This generates a magnetic shock wave that in itself is a grave contradiction, because a wave of direct current voltage meets an alternating current wave, and these have to be adjusted in both proportion and time. This is what requires some electronics, as referred to in the patent itself, using old valves to activate the said valve filters.

A little later on, in 1965, a system presented by RICARDO ¬ CO., ENGINEERS on an "IMPROVEMENT IN THE CONSTRUCTION OF CURRENT STABILISERS" shows a system that references a transformer, which, in order to reduce the voltage to a fixed level, must use some resistors on the secondary output. It is obvious that a mere fluctuation of the input to the network, it would not work, as it would compromise the output resistors of the transformer itself.

As of today, the industry has not evolved very much in this area, particularly if we take into account the energy saving aspect derived from voltage stability, including improvements in the functional abilities of such devices within this line of energy saving at the moment one can find condenser batteries and cut cycle electronic systems.

Regarding CONDENSER BATTERIES, which are commonly used in the industrial sector to eliminate consumption of reactive energy by inductive equipment (engines).

These banks introduce a consumption of capacitive reactive energy (negative) which compensates the inductive reactive energy (positive) making the overall consumed reactive energy come as close as possible to zero. For them to function properly, these capacitor banks must include an automatic control system.

This is due to the fact that the installations do not always work at full capacity so will need a regulator which will activate more or less condensers, according to demand, in this way compensating the reactive energy in an efficient way.

It should be noted that problems can arise if there is an excessive installation of these systems, as there would be a discharge of capacitive energy into the grid, resulting in the installation being sealed and even being cut off from the grid supply.

It is also necessary to note that these systems only compensate the reactive energy normally consumed by an installation, so can also increase the consumption of active energy in the systems.

In general terms, the users of these types of products do not consume reactive energy for which they would have to pay high surcharges, particularly in mono-phase household consumption, where this consumption is not charged to the consumer.

With regards to CYCLE STOPPING SYSTEMS, the main function of this equipment is to "eliminate" a part of the sine-wave cycle supplied to the consumers.

Any intensity which is not supplied is not billed, as it is not utilized by the consumers. In this way it achieves a reduction in electric power consumption.

However, the consequences of shortening the electric wave are greater. A larger amount of harmonics are generated in the current which directly affects any connected electrical apparatus. This is particularly delicate in electronic equipment, which is more susceptible to this type of disturbances.

Likewise, the consumers cannot carry out any work during the time in which there is no electric supply. If this time is excessive on trying to maximize saving caused by the cuts, there is a risk of losing machine work efficiency, and even of causing critical failure.

The AC voltage stabilizer which the invention proposes, does not have electronics or parallel conversion transformers, and due to its exclusive serial connection system, it can be connected to any type of industrial installation or lesser power systems. It does not produce any negative effects on the installation.

### Explanation of the invention.

EI The AC Voltage Stabilizer which the invention proposes, as claimed in independent claims 1 and 2, bases its functionality on delaying the voltage wave in relation to the current, and not the current in relation to the voltage, which is a very notable difference.

This is achieved by passing the phase voltage through a copper wire coil installed on a magnetic body plate or ferrite, similar to conventional transformers.

The induction thus obtained on the magnetic body plate, takes a certain amount of time to integrate in the inductive coil itself (magnetic delay effect; as a coil installed on a magnetic body plate is activated, it creates a magnetic field which can also create an electric field). As this effect is produced, it enables the reactive currents which are generated by the electric receptors to be absorbed and converted into real active current.

This system of well calculated voltage excesses which the grid supplies, will, to a large extent, help us to maintain and manage the electric receptors well, and as a result, the AC Voltage Stabilizer Filter which is proposed herein works equally well with mono-phase or three-phase voltages (we will apply slight modifications and changes to adapt it to the number of phases which are online).

These two systems are installed for the users in series with the power line input, setting the voltage at 222 for mono-phase currents and at 385 volts for three-phase currents, using one module for mono-phase currents and three modules for three-phase currents, also connected in series. Further on we will describe each one separately, as the connections will differ according to which type which is being used.

Both for mono-phase or three-phase voltages, the system is envisioned to increase the magnetic acceleration capacity, with an auxiliary acceleration coil installed in the same core plate or magnetic ferrite, which will allow us similarly, to absorb undesired noise or temperature. This coil comes calculated as any conventional primary coil for a transformer, and is crucial to us as it is in charge of accelerating the integration process of the magnetic wave produced by the work phase over the magnetic core plate or ferrite.

### (1) Mono-phase System

The main difference that the AC voltage stabilizer for mono-phase systems has with three-phase systems is that it needs to improve the return current, as it is only a one-phase work system.

In order to mount the mono-phase system, a coil is installed connected in series to the work phase, with the corresponding input and output, and equipped with a few copper wire turns. The phase coil has to be connected in series to the user's input line to obtain the first magnetic delay effect. The return currents, which return via the neutral, arrive fairly deformed by the electric receptors themselves, and need to be treated in the same way so as to ensure that as many reactive and parasite currents can be integrated in the core plate or magnetic ferrite.

In order to achieve this effect, we need to install a coil with the same characteristics as the phase coil, separated from each other by 180° and with the same number of turns as the phase coil. We need to work the return current through neutral connecting the said coil in the same way as the phase coil, that is, in series with the user's input line.

Once the phase coil and the neutral coil are connected, we need the system to act on the core plate or magnetic ferrite, with the difference that on entering the phase in a certain direction, we should connect the return currents via neutral in the opposite direction, in order to integrate the magnetic fields of opposite sign so that at least a part of the reactive currents that are so harmful to the end electrical appliances can be eliminated.

Obviously, as one confronts the magnetic fields generated in the core magnetic plate or magnetic ferrite by the phase and the neutral, it will cause unnecessary noise and overheating, which is a big problem. To avoid this, we need to install a third copper wire coil on the core plate or magnetic ferrite, which is calculated as a conventional primary coil, with many turns and a small copper wire cross section.

The third coil installed in the same core plate or magnetic ferrite is connected in parallel to the user's network, and its mission is to accelerate the magnetic fields in order to avoid overheating and excess noise. The said coil can be installed before the phase and neutral coils, conveniently isolated, so as to be able to coil the phase and neutral coils at a later stage.

### (2) Three-phase Systems

The AC Voltage Stabiliser for three-phase systems is made up of three independent modules, one per phase. They are mounted in the same way as the mono-phase magnetic cores, with some modifications, namely, that only one phase coil and one magnetic acceleration coil are mounted for each magnetic core, thus eliminating the neutral coil.

The phase connections are made in the same way as the mono-phase system, that is to say, one coil with a few spirals with phase input and output and an acceleration coil with many turns and small diameter copper wire, calculated as though it were a conventional transformer. The acceleration coil connections are different to mono-phase ones; they are fitted with a specific phase input and an output to the network, in this way completing the electric circuit.

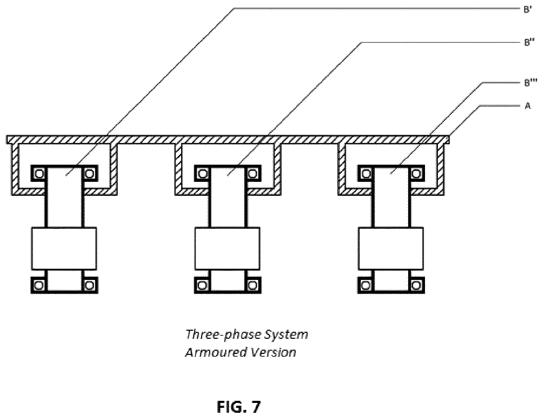

It is worth pointing out that an armoured version of this equipment exists in the three-phase System version, which can be installed by slightly altering the composition of the same, with the need to install an additional acceleration system or shade pole. (Figure 7).

### Explanation of the diagrams/ figures/drawings

In order to complete the present description and so as to aid in a better understanding of the characteristics of the invention we attach a set of diagrams to this memorandum, which by means of illustration, show the following:
In fig. n°1: Representation of how a Mono-phase System works.
In fig. n°2: Representation of how a Three-phase system works.
In fig. n°3: Mono-phase System - Theoretical Connection diagram.
In fig. n°4: Three-phase System -Theoretical Connection diagram.
In fig. n°5: Representation of the Components of a Mono-phase System.
In fig. n°6: Representation of the components of a Three-phase System.
In fig. n°7: Representation of an armoured version of the Three-phase System.

### Preferred embodiment of the invention

In order to provide a better understanding of the equipment we present below the AC Voltage Stabiliser in both its versions, mono-phase and three-phase.

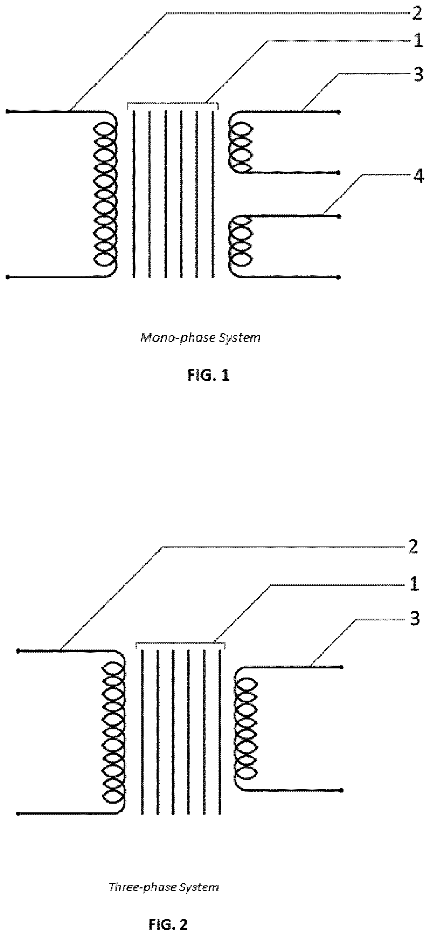

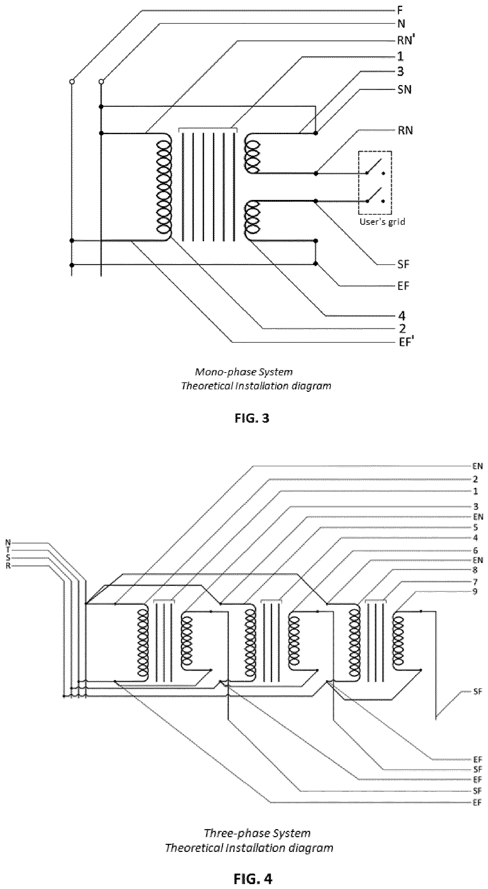

With regard to the theoretical diagram of the mono-phase system (Figure 1), it is made up of a body plate or magnetic ferrite (1). A magnetic acceleration coil (2), an in phase work coil (3) and a neutral work coil (4) are installed on the body plate or magnetic ferrite. In its corresponding theoretical installation diagram (Figure3) we can see the acceleration coil connections (2) with the in-phase input (EF¹) and corresponding output to neutral (RN¹), a work coil (3) with its input (RN) and output (SN), the return coil to neutral (4) with its corresponding phase input (EF) and in phase output (SF), both coils, (2) and (3) connected to the grid.

Regarding the theoretical diagram of the three-phase system (Figure 2), it is made up of a body plate or magnetic ferrite (1). There are a magnetic acceleration coil per phase (2) and an in-phase work coil (3) installed on the body plate or magnetic ferrite. In its corresponding theoretical installation diagram (Figure 4) we can see the magnetic acceleration coil per phase, numbers (2), (5) and (8), with their corresponding neutral inputs, (EN¹), (EN²) and (EN³) and the corresponding phase inputs, (EF¹) (EF²) (EF³). In the same manner we can see how each work coil per phase, (3), (6) and (9) have their corresponding in phase input, (EF⁴), (EF⁵) and (EF⁶), as well as their corresponding in phase output, (SF¹), (SF²) and (SF³).

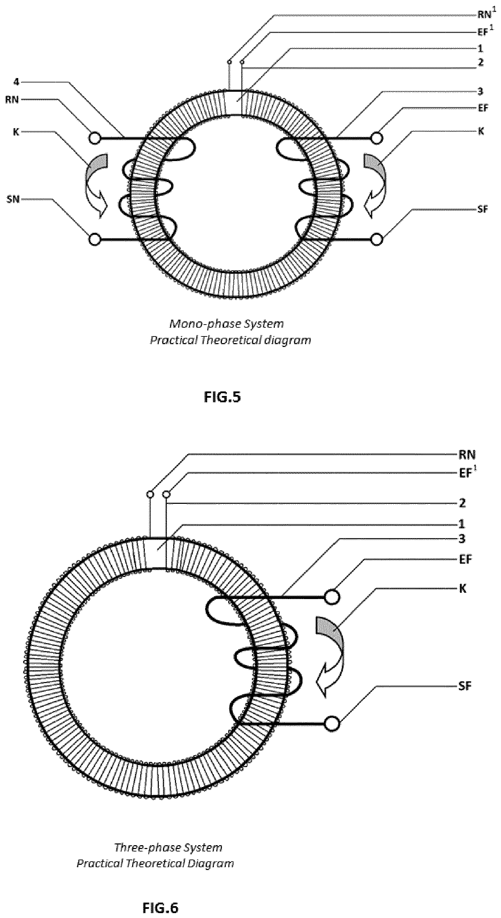

Both the mono-phase and three-phase systems come with their theoretical installation diagrams represented in figures 3 and 4 respectively. Having set out the specific components of each of the electric versions, i.e. mono-phase and three-phase, we can see how the mono-phase system mentioned in the practical theoretical diagram (Figure 5) is made up of the following elements:
- Body plate or toroidal magnetic ferrite (1).
- Magnetic field acceleration coil (2).
- Phase voltage Input for the magnetic acceleration coil (EF¹).
- Magnetic acceleration coil neutral voltage return (RN¹).
- Working coil in phase to create magnetic delay effect (3).
- Magnetic induction work phase input connected in series (EF).
- Magnetic induction work phase output connected in series (SF).
- Neutral work coil to create magnetic delay effect (4).
- Neutral return in magnetic flow towards the installation port (RN).
- Neutral output to the electric grid (SN).
- Arrows indicating direction of magnetic flow (K).

The practical theoretical diagram of the three-phase system (Figure 6) is made up of the following elements:
- Body plate, or toroidal magnetic ferrite, one per phase (1).
- Magnetic field accelerating coil, one per phase (2).
- Acceleration coil voltage input, one per phase (EF¹).
- Acceleration coil return via neutral, one per phase (RN).
- Work phase voltage input (EF).
- Work phase voltage output (SF).
- Arrows indicating direction of magnetic flow (K).

The armoured version of the three-phase system (Figure 7) is made up of the following elements:
- Acceleration system (A)
- Main coil for each work phase (B')
- Main coil for each work phase (B")
- Main coil for each work phase (B'")

## Claims

1. An Alternating current (AC) voltage stabilizer adapted for mono-phase systems **characterized by** having a magnetic body plate or magnetic ferrite (1) and comprising three coils (2, 3, 4) installed on the magnetic body plate or magnetic ferrite (1), said coils being a magnetic acceleration coil (2) consisting of a number of turns and being connected in parallel with the user's input, an in-phase working coil (3) that is connected in series with the user input line, and a neutral work coil (4) that is connected in series with the input line of the user and displaced 180 degrees with respect to the in-phase working coil (3), both having the same number of turns.

2. An Alternating current (AC) voltage stabilizer and adapted for three-phase systems **characterized by** having per phase a magnetic body plate or magnetic ferrite (1) and two coils (2, 3) being:
a magnetic acceleration coil (2, 5, 8) with acceleration voltage input (EF') and acceleration coil return (RN), and
an in-phase working coil (3, 6, 9) to which is assigned a phase input (EF) and output (SF), the magnetic acceleration coil and the in-phase coil being installed on the magnetic body plate or magnetic ferrite (2), and where the number of turns of the in-phase working coil (3) is less than the number of turns of the magnetic acceleration coil (2).

## Patentansprüche

1. Ein Wechselspannungsstabilisator, der für Einphasensysteme ausgelegt ist und **gekennzeichnet ist durch** eine Magnetkörperplatte oder einen Magnetferrit (1) und drei auf der Magnetkörperplatte oder dem Magnetferrit installierte Spulen (2, 3, 4) (1) wobei die Spulen
eine magnetische Beschleunigungsspule (2), bestehend aus einer Anzahl von Windungen und die Eingabe des Benutzer
einer gleichphasige Arbeitsspule (3), die in Serie mit der Benutzer-Eingangsleitung verbunden ist,
und eine neutrale Arbeitsspule (4) parallel geschaltet ist daß in Reihe mit der Eingangsleitung des Benutzers und um 180 Grad versetzt gegenüber der in Phasen-Arbeitsspule (3) verbunden ist, die beide die gleiche Anzahl von Windungen aufweisen.

2. Ein Wechselspannungsstabilisator, der für Dreiphasensysteme ausgelegt ist und **dadurch gekennzeichnet ist, dass** er pro Phase eine Magnetkörperplatte oder einen Magnetferrit (1) und zwei Spulen (2, 3) aufweist:
eine magnetische Beschleunigungsspule (2, 5, 8) mit Beschleunigungsspannungseingang (EF) und Beschleunigungsspulenrückführung (RN) und eine gleichphasige Arbeitsspule (3, 6, 9), der
ein Phaseneingang und -ausgang zugeordnet ist (SF), wobei die Magnetbeschleunigungsspule und die In-Phase-Spule auf der Magnetkörperplatte oder dem Magnetferrit (2) installiert sind
und wobei die Anzahl der Windungen der gleichphasigen Arbeitsspule (3) geringer ist als die Anzahl der Windungen der magnetischen Beschleunigungsspule (2).

## Revendications

1. Stabilisateur de courant alternatif (AC) adapté aux systèmes monophasés **caractérisé par le fait qu'**il est doté d'une plaque magnétique ou d'une ferrite magnétique (1) et de trois bobines (2, 3, 4) installées sur la plaque magnétique ou en ferrite magnétique (1), lesdites bobines étant
une bobine d'accélération magnétique (2) constituée de plusieurs tours et connectée en parallèle à l'entrée de l'utilisateur
une bobine de travail en phase (3) qui est connectée en série avec la ligne d'entrée de l'utilisateur,
et une bobine de travail neutre (4) qui est connectée en série avec la ligne d'entrée de l'utilisateur et décalée de 180 degrés par rapport à la bobine de travail en phase (3), les deux ayant le même nombre de tours.

2. Stabilisateur de courant alternatif (CA) adapté aux systèmes triphasés, **caractérisé en ce qu'**il est doté d'une plaque de corps magnétique ou d'une ferrite magnétique (1) et de deux bobines (2, 3):
une bobine d'accélération magnétique (2, 5, 8) avec entrée de tension d'accélération (EF) et retour de la bobine d'accélération (RN), et
une bobine de travail en phase (3, 6, 9) à laquelle sont associées une entrée et une sortie de phase (SF), la bobine d'accélération magnétique et la bobine en phase étant installées sur la plaque de corps magnétique ou la ferrite magnétique (2)
et où le nombre de tours de la bobine de travail en phase (3) est inférieur au nombre de tours de la bobine d'accélération magnétique (2).
